# EUROPEAN PATENT APPLICATION

(11) **EP 3 079 102 A1**
(43) Date of publication of application: **12.10.2016**
(21) Application number: 16163945.5
(22) Date of filing: 05.04.2016
(51) Int. Cl.: G06K 19/00, A45C 11/00

(54) **CHIP CARD HOLDER**

(30) Priority: 10.04.2015 TW 104111521
(71) Applicant: Fen Deng Optoelectronic Applications Ltd., Miaoli County (TW)
(72) Inventor: YE, Jian De, Miaoli County (TW)
(74) Representative: Cabinet Chaillot

(57) **Abstract**

A card holder (1) includes a projection (13) formed on an outer surface; an elastic pull cord (L) having a first end fastened in the projection (13); a protrusion (S) secured to a second end of the pull cord (L); and at least one receptacle (121) each configured to receive a card (K). In a first position, the protrusion (S) is attached to the projection (13). In a second position, the protrusion (S) is spaced from the projection (13).

## Description

### BACKGROUND OF THE INVENTION

### 1. Field of the Invention

The invention relates card holders and more particularly to a chip card holder with improved characteristics.

### 2. Description of Related Art

There is a conventional chip card holder configured to convert a micro SIM (subscriber identification module) card into a standard SIM card. The card holder includes a flat insulating housing for accommodating a standard SIM card, and a groove for accommodating a micro SIM card. At least one elastic part is disposed in the insulating housing opened in one side of the groove, and disposes in the groove to urge against the micro SIM card for fastening the micro SIM card in the groove.

While the device enjoys its success in the market, continuing improvements in the exploitation of chip card holder of this type are constantly being sought.

### SUMMARY OF THE INVENTION

It is therefore one object of the invention to provide a card holder comprising a projection formed on an outer surface; an elastic pull cord having a first end fastened in the projection; a protrusion secured to a second end of the pull cord; and at least one receptacle each configured to receive a card; wherein in a first position, the protrusion is attached to the projection; and wherein in a second position, the protrusion is spaced from the projection.

The above and other objects, features and advantages of the invention will become apparent from the following detailed description taken with the accompanying drawings.

### BRIEF DESCRIPTION OF THE DRAWINGS

FIG. 1 is a perspective view of a card holder according to a first preferred embodiment of the invention, a card to be inserted into a receptacle of the card holder;
FIG. 2 is a view similar to FIG. 2 showing the card being partially disposed in the receptacle in the insertion step;
FIG. 3 is a perspective view of the card holder with a pull cord being exposed by pulling the protrusion;
FIG. 4 is a perspective view of the card holder with the card being received in the receptacle in a storage state;
FIG. 5 is a perspective view of a card holder according to a second preferred embodiment of the invention, a tray to be inserted into a receptacle of the card holder;
FIG. 6 is a view similar to FIG. 5 showing the tray being partially disposed in the receptacle in the insertion step;
FIG. 7 is a perspective view of the tray with the card to be positioned thereon;
FIG. 8 is a perspective view of the card holder with a pull cord being exposed by pulling the protrusion;
FIG. 9 is a perspective view of the card holder with the card being received in the receptacle in a storage state;
FIG. 10 is a perspective view of a card holder according to a third preferred embodiment of the invention;
FIG. 11 is a perspective view showing the covering member to be fastened on a top of the card holder;
FIG. 11A is a perspective view showing the covering member fastened on the top of the card holder;
FIG. 12 is a perspective view showing an exposed tray being removed out of the receptacle of the card holder;
FIG. 13 is a perspective view of the card holder with a pull cord being exposed by pulling the protrusion;
FIG. 14 is a perspective view of the card holder with the pull cord being exposed and the card holder being placed on a data reading device so that the data reading device can read data from the card in the receptacle of the card holder;
FIG. 15 is a perspective view of a card holder according to a fourth preferred embodiment of the invention with a card partially inserted into one of receptacles;
FIG. 15A is a perspective view of the card;
FIG. 16 is a perspective view of the card holder;
FIG. 17 is a perspective exploded view of the card holder with the covering member fastened on a top of the card holder;
FIG. 18 is a perspective view of the card holder;
FIG. 19 is a perspective view of the card holder with a pull cord being exposed by pulling the protrusion;
FIG. 20 is a perspective view of the card holder with the pull cord being exposed and the card holder being placed on a data reading device so that the data reading device can read data from the card in the receptacle of the card holder;
FIG. 21 is a perspective view of a card holder according to a fifth preferred embodiment of the invention, a card to be inserted into a receptacle of the card holder;
FIG. 22 is a view similar to FIG. 21 showing the card being partially disposed in the receptacle in the insertion step;
FIG. 23 is a perspective view of the card holder;
FIG. 24 is a perspective view of the card holder with a pull cord being exposed by pulling the protrusion;
FIG. 25 is a perspective view of the card holder with the protrusion being attached to the projection after the force of pulling the protrusion is released;
FIG. 26 is a perspective view of a card holder according to a sixth preferred embodiment of the invention;
FIG. 27 is a perspective view showing the a card being partially inserted into one of the receptacles in an insertion step;
FIG. 28 is a view similar to FIG. 27 showing the card being completed received in the receptacle at the end of the insertion step;
FIG. 29 is a perspective view of the card holder with a pull cord being exposed by pulling the protrusion;
FIG. 30 is a perspective view of the card holder with the pull cord being exposed and the card holder being placed on a data reading device so that the data reading device can read data from the card in the receptacle of the card holder;
FIG. 31 is a perspective view of a card holder according to a seventh preferred embodiment of the invention;
FIG. 32 is a perspective view of the card holder with a tray being partially disposed in the receptacle;
FIG.33 is a view similar to FIG. 32 with the tray removed out of the receptacle;
FIG. 34 is a perspective view of the card holder with a pull cord being exposed by pulling the protrusion;
FIG. 35 is a perspective view of the card holder with the protrusion being attached to the projection after the force of pulling the protrusion is released;
FIG. 36 is a perspective view of the tray with the card to be positioned thereon;
FIG. 37 is a perspective view of a card holder according to an eighth preferred embodiment of the invention;
FIG. 38 is a perspective view showing a tray being partially inserted into one of the receptacles of the card holder in an insertion step;
FIG. 39 is a perspective view of the card holder with the pull cord exposed by pulling the protrusion and the card holder placed on a data reading device so that the data reading device can read data from the card in the receptacle of the card holder;
FIG. 40 is a perspective view of a card holder according to a ninth preferred embodiment of the invention;
FIG. 41 is a perspective view of the card holder with a card being partially disposed in the receptacle in an insertion step;
FIG. 42 is a perspective view of the card holder and the card showing the card being capable of inserting into the receptacle or removing out of the receptacle;
FIG. 43 is a perspective view of a card holder according to a tenth preferred embodiment of the invention;
FIG. 44 is a perspective view of the card holder and a tray showing the tray being capable of inserting into the receptacle;
FIG. 45 is a perspective view of the card holder and the tray showing the tray being capable of removing out of the receptacle;
FIG. 46 is a perspective view of the tray with a card to be positioned thereon;
FIG. 47 is a perspective view of a card holder according to an eleventh preferred embodiment of the invention;
FIG. 48 is a view similar to FIG. 47 with a tray received in one of the receptacles;
FIG. 49 is a perspective view of the card holder and the tray showing the tray being capable of inserting into the receptacle or removing out of the receptacle;
FIG. 50 is a perspective view of a card holder according to a twelfth preferred embodiment of the invention;
FIG. 51 is a perspective view of the card holder and the card showing the card being inserted into one of the receptacles or being removed out of the receptacle;
FIG. 52 is a view similar to FIG. 50 with the card received in the receptacle;
FIG. 53 is a perspective view of a card holder according to a thirteenth preferred embodiment of the invention with a tray received therein;
FIG. 54 is a view similar to FIG. 53 showing the tray being partially exposed in a removal step;
FIG. 55 is a view similar to FIG. 54 showing the tray removed out of the card holder;
FIG. 56 is a perspective view of the tray with the card to be positioned thereon;
FIG. 57 is a perspective view of a card holder according to a fourteenth preferred embodiment of the invention;
FIG. 58 is a view similar to FIG. 57 showing a tray received in one receptacle;
FIG. 59 is a perspective view showing the exposed tray being removed out of the receptacle of the card holder;
FIG. 60 is a perspective view of a card holder according to a fifteenth preferred embodiment of the invention;
FIG. 61 is a view similar to FIG. 60 showing a card received in one of the receptacles;
FIG. 62 is a perspective view showing the exposed card being removed out of the receptacle of the card holder;
FIG. 63 is a perspective view of a card holder according to a sixteenth preferred embodiment of the invention;
FIG. 64 is a perspective view showing a card being partially exposed in a step of removing out of the receptacle of the card holder; and
FIG. 65 is a perspective view showing the card being removed out of the receptacle.

### DETAILED DESCRIPTION OF THE INVENTION

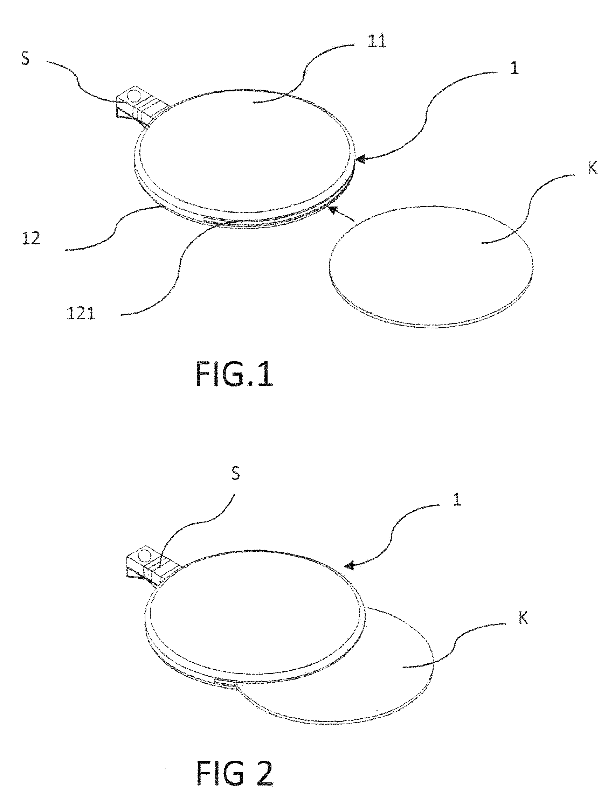

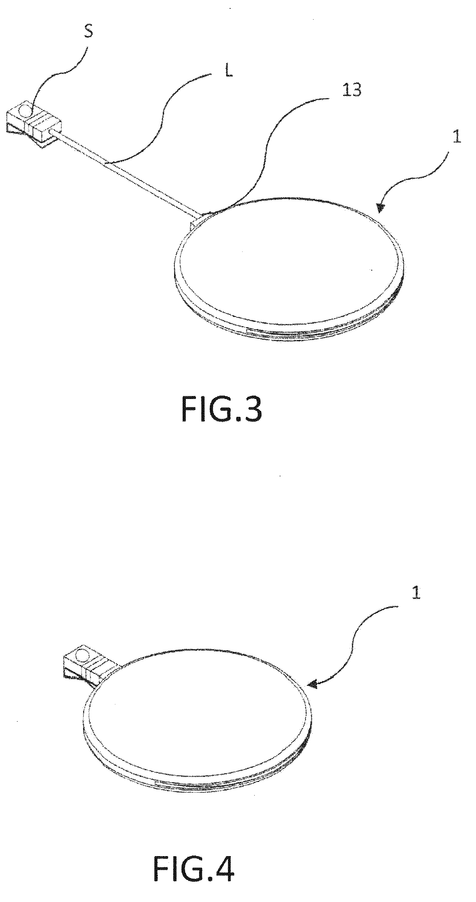

Referring to FIGS. 1 to 4, a card holder 1 in accordance with a first preferred embodiment of the invention comprises a coin shaped casing 12 including a receptacle 121 opened to an edge, a projection 13 formed on the edge opposite to the receptacle 121, and a covering member 11 formed on a top surface; an elastic pull cord L having one end fastened in the projection 13; and a protrusion S secured to the other end of the pull cord L. In a first position, the protrusion S is attached to the projection 13. In a second position, the protrusion S is spaced from the projection 13 by pulling the pull cord L a distance.

A disc shaped card K is configured to receive in the card holder 1 for storage by inserting into the receptacle 121. The card K can be an identification card, a charge card, a credit card, debit card, an ATM (automated teller machine) card, a stored value card, or the like.

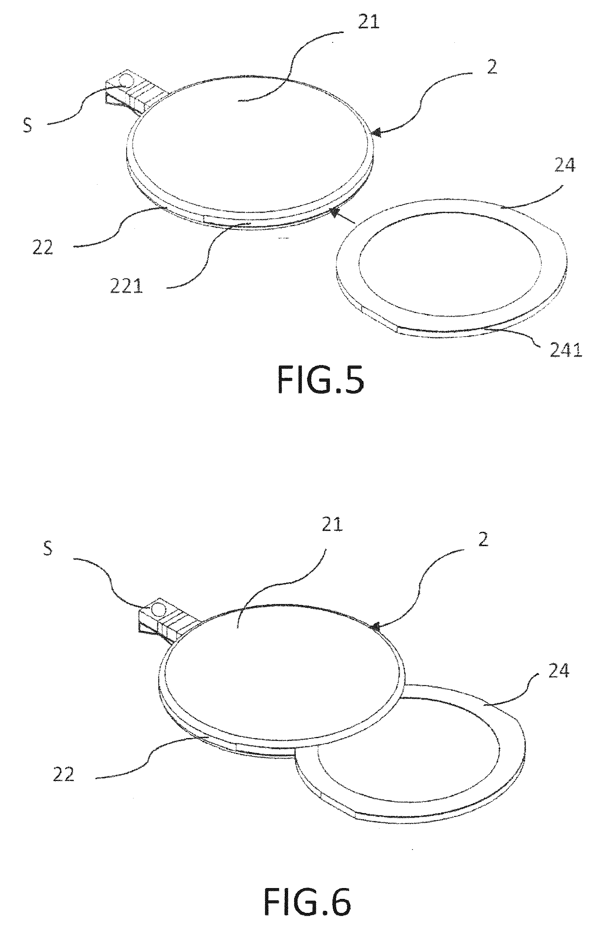

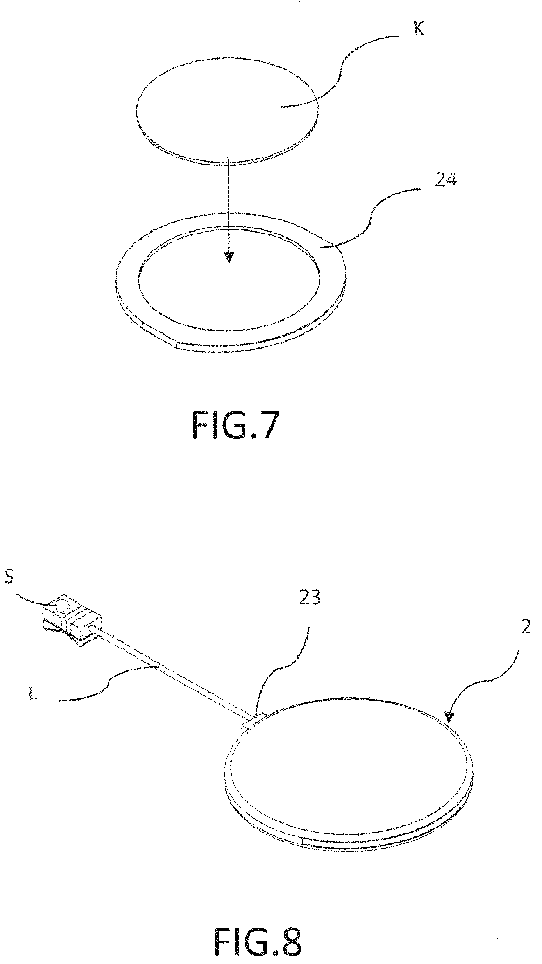

Referring to FIGS. 5 to 9, a card holder 2 in accordance with a second preferred embodiment of the invention is shown. The characteristics of the second preferred embodiment are shown below.

A coin shaped casing 22 includes a receptacle 221 opened to an edge, a projection 23 formed on the edge opposite to the receptacle 221, and a covering member 21 formed on a top surface. A tray 24 includes a raised edge 241. An elastic pull cord L has one end fastened in the projection 23. A protrusion S is secured to the other end of the pull cord L. In a first position, the protrusion S is attached to the projection 23. In a second position, the protrusion S is spaced from the projection 23 by pulling the pull cord L a distance.

A disc shaped card K is configured to receive in a concave portion of the tray 24. Further, the tray 24 is configured to receive in the card holder 2 for storage by inserting into the receptacle 221.

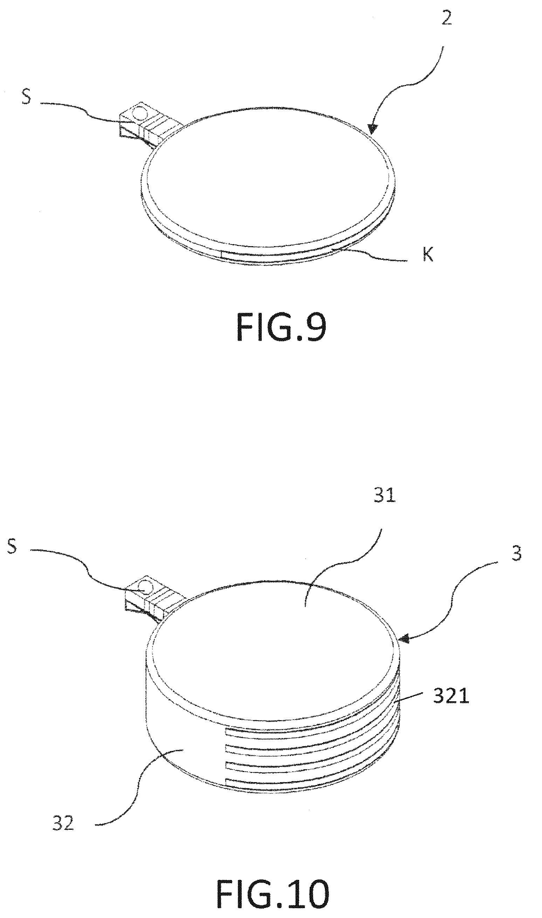

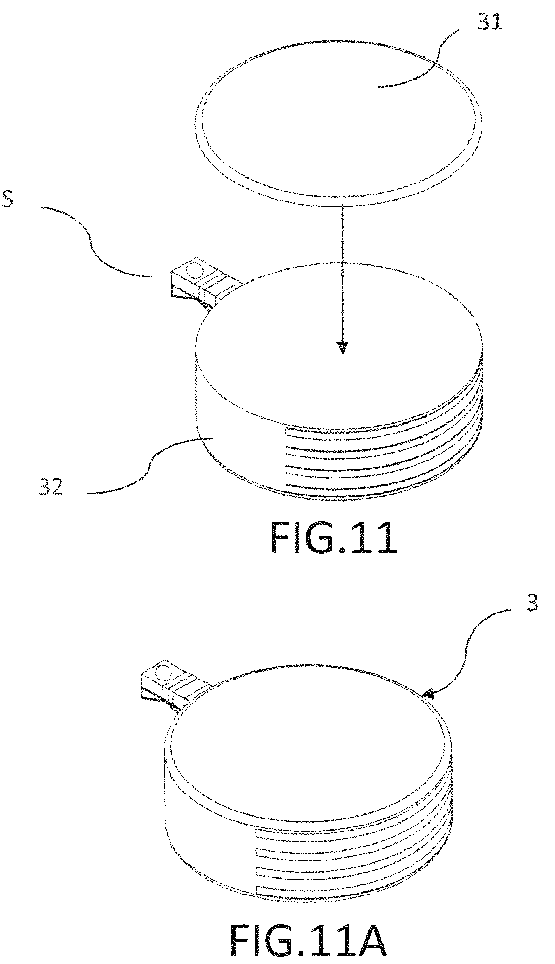

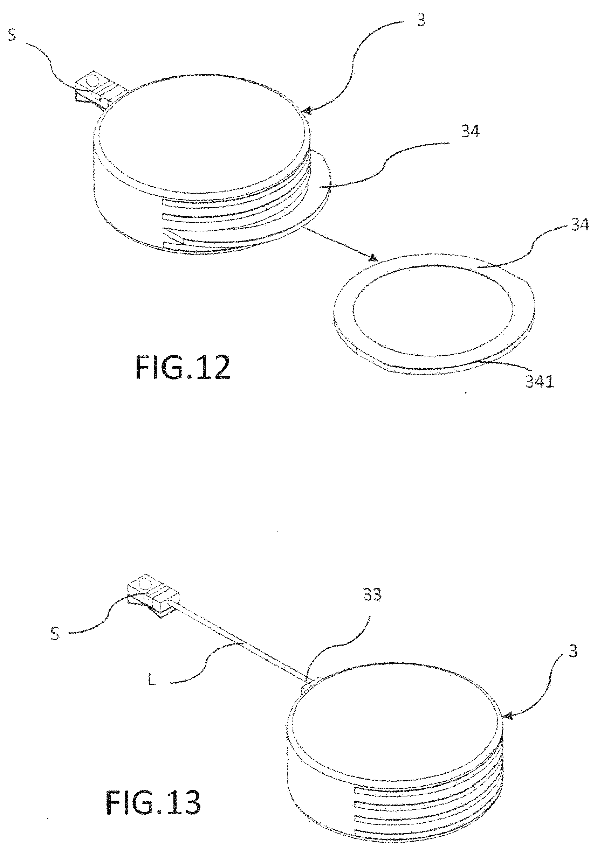

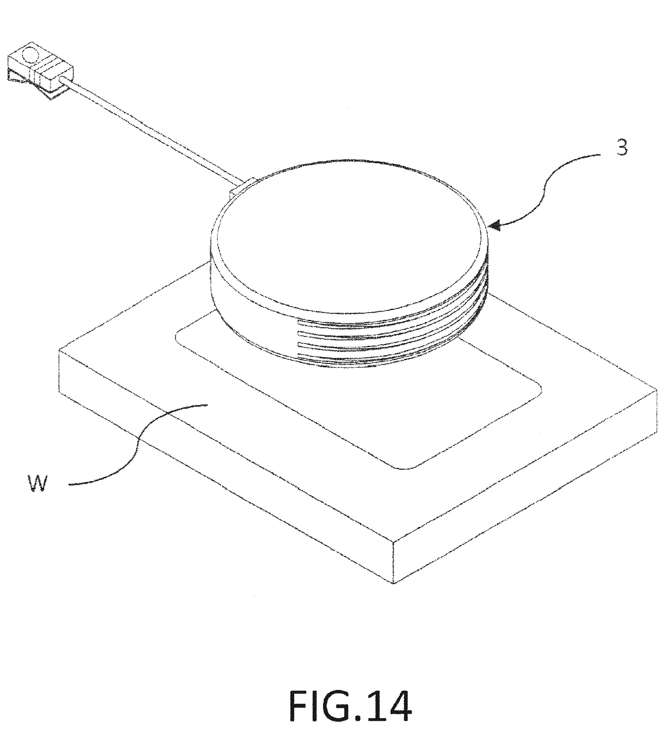

Referring to FIGS. 10 to 14, a card holder 3 in accordance with a third preferred embodiment of the invention is shown. The characteristics of the third preferred embodiment are shown below.

A cylindrical casing 32 includes a plurality of receptacles 321 opened to an outer surface, a projection 33 formed on the edge opposite to the receptacles 321, and a covering member 31 formed on a top surface. A tray 34 includes a raised edge 341. An elastic pull cord L has one end fastened in the projection 33. A protrusion S is secured to the other end of the pull cord L. In a first position, the protrusion S is attached to the projection 33. In a second position, the protrusion S is spaced from the projection 33 by pulling the pull cord L a distance.

A disc shaped card K is configured to receive in a concave portion of the tray 34. Further, the tray 34 is configured to receive in the card holder 3 for storage by inserting into one of the receptacles 321. Further, the card holder 3 can be placed on a data reading device W so that the data reading device W can read data from the card K on the tray 34 in the card holder 3.

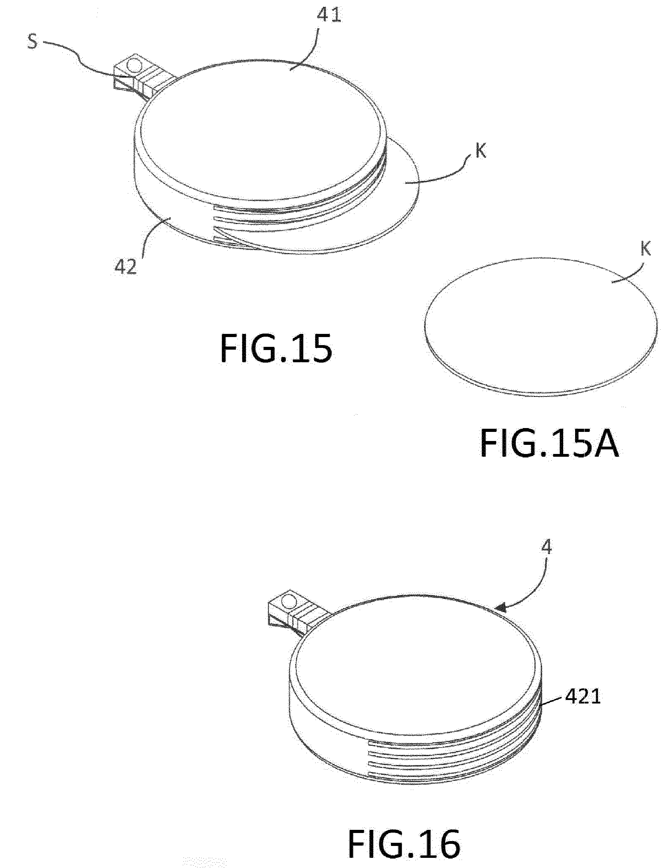

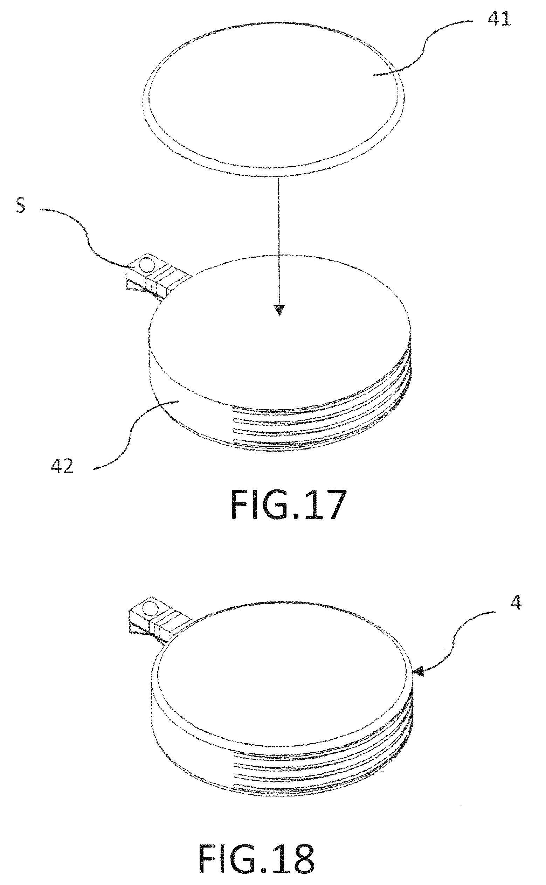

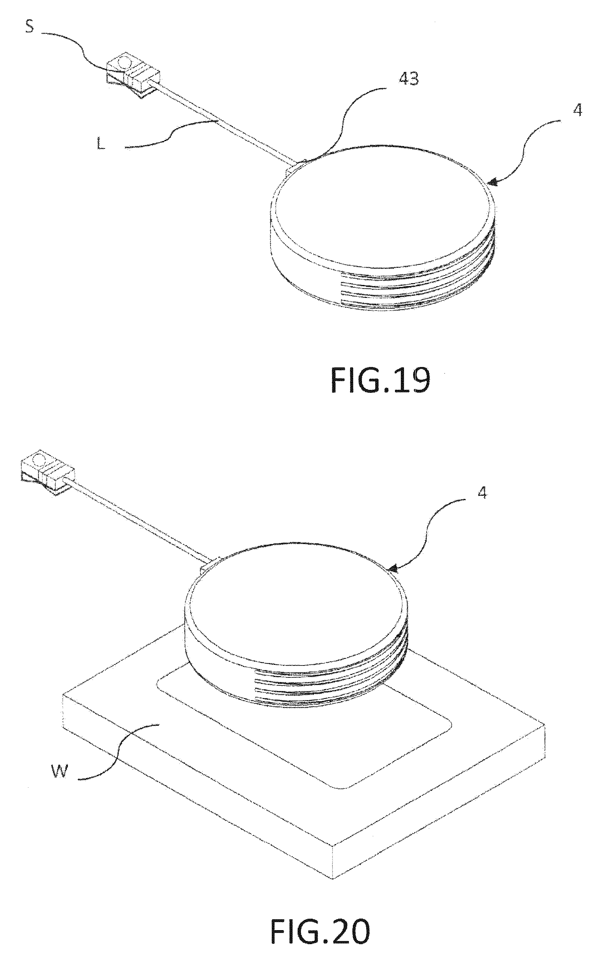

Referring to FIGS. 15 to 20, a card holder 4 in accordance with a fourth preferred embodiment of the invention is shown. The characteristics of the fourth preferred embodiment are shown below.

A cylindrical casing 42 includes a plurality of receptacles 421 opened to an outer surface, a projection 43 formed on the edge opposite to the receptacles 421, and a covering member 41 formed on a top surface. An elastic pull cord L has one end fastened in the projection 43. A protrusion S is secured to the other end of the pull cord L. In a first position, the protrusion S is attached to the projection 43. In a second position, the protrusion S is spaced from the projection 43 by pulling the pull cord L a distance.

A disc shaped card K is configured to receive in the card holder 4 for storage by inserting into the receptacle 421. Further, the card holder 4 can be placed on a data reading device W so that the data reading device W can read data from the card K in the card holder 4.

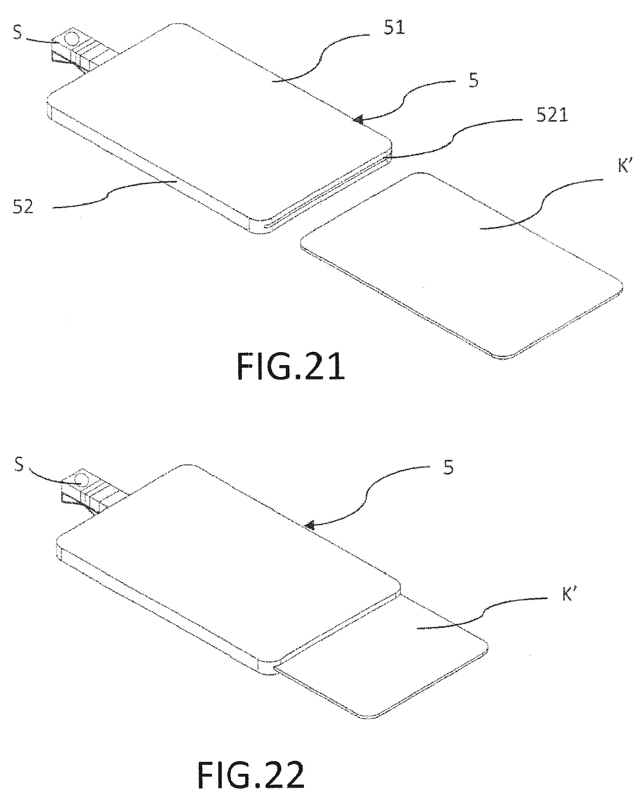

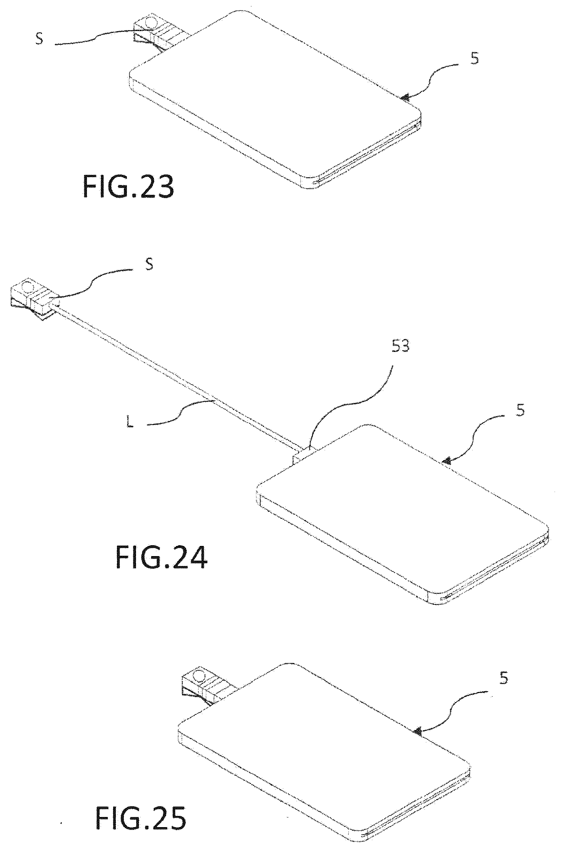

Referring to FIGS. 21 to 25, a card holder 5 in accordance with a fifth preferred embodiment of the invention comprises a parallelepiped casing 52 including a receptacle 521 opened to a front end, a projection 53 formed on a rear end, and a covering member 51 formed on a top surface; an elastic pull cord L having one end fastened in the projection 53; and a protrusion S secured to the other end of the pull cord L. In a first position, the protrusion S is attached to the projection 53. In a second position, the protrusion S is spaced from the projection 53 by pulling the pull cord L a distance.

A rectangular card K' is configured to receive in the card holder 5 for storage by inserting into the receptacle 521.

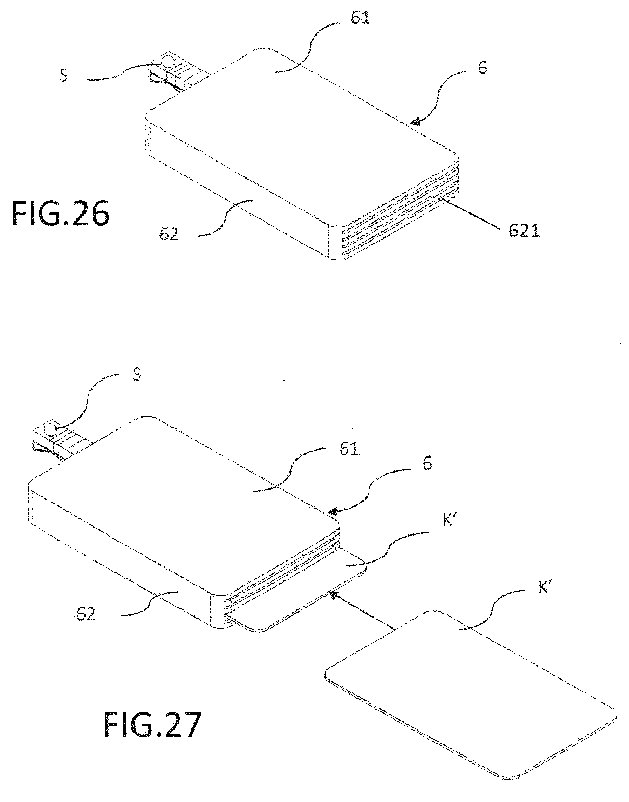

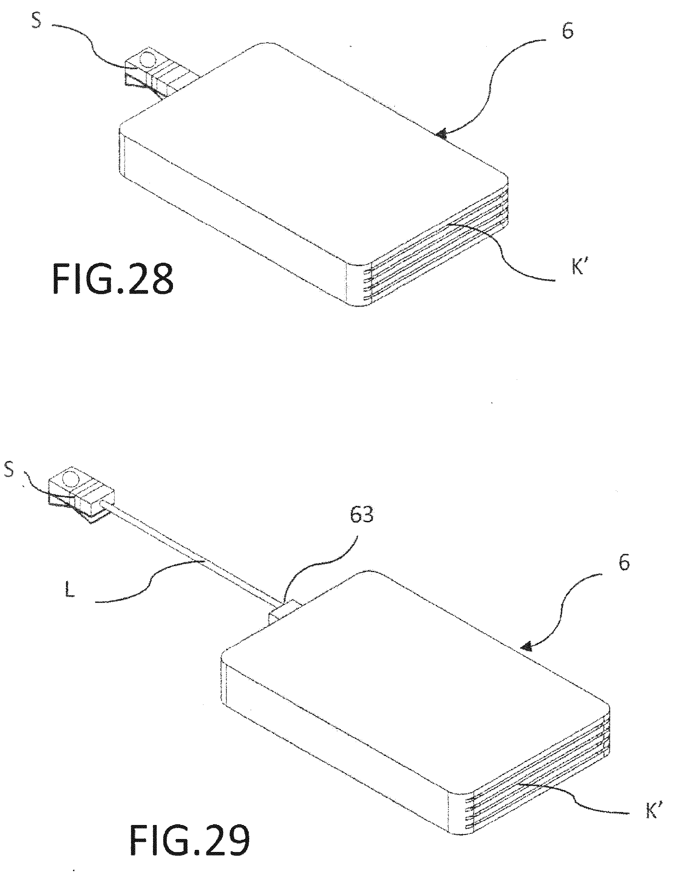

Referring to FIGS. 26 to 30, a card holder 6 in accordance with a sixth preferred embodiment of the invention comprises a parallelepiped casing 62 includes a plurality of receptacles 621 opened to a front end, a projection 63 formed on a rear end, and a covering member 61 formed on a top surface; an elastic pull cord L having one end fastened in the projection 63; and a protrusion S secured to the other end of the pull cord L. In a first position, the protrusion S is attached to the projection 63. In a second position, the protrusion S is spaced from the projection 63 by pulling the pull cord L a distance.

A rectangular card K' is configured to receive in the card holder 6 for storage by inserting into one of the receptacles 621. Further, the card holder 6 can be placed on a data reading device W so that the data reading device W can read data from the card K' in the receptacle 621 of the card holder 6.

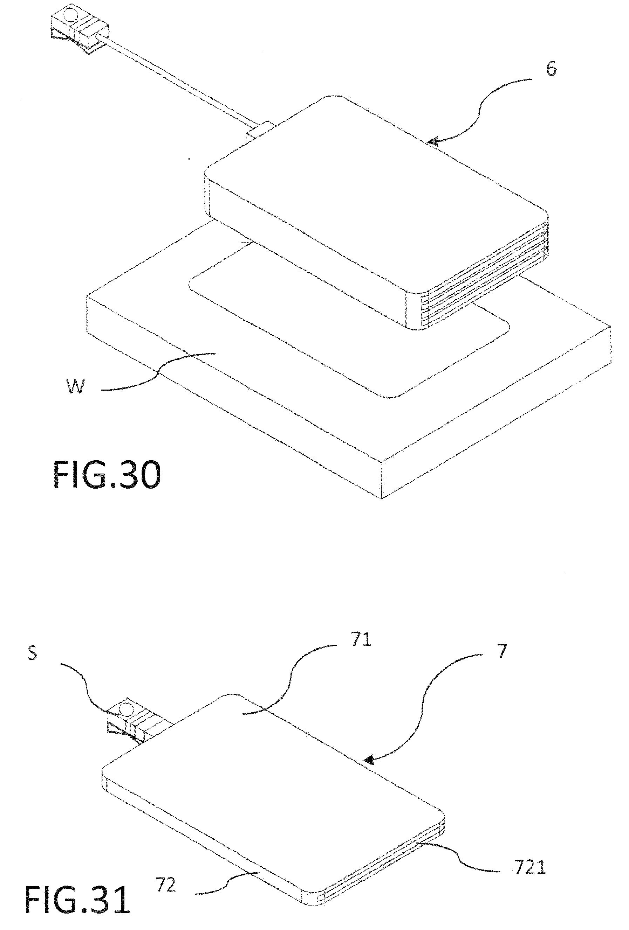

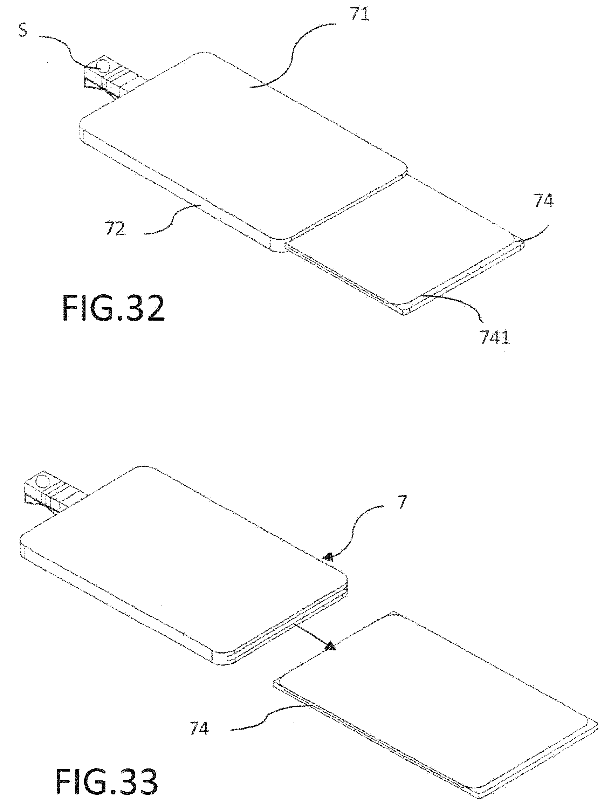

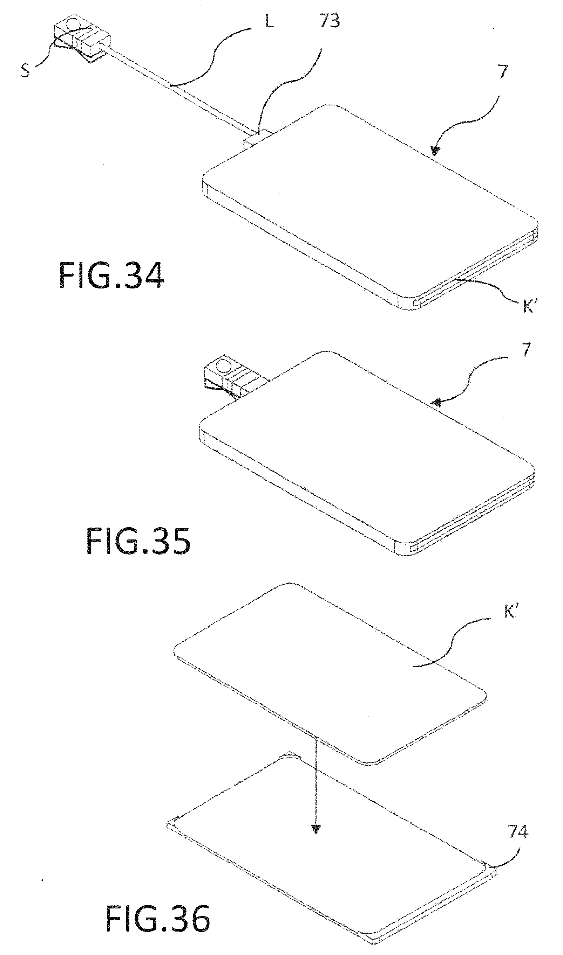

Referring to FIGS. 31 to 36, a card holder 7 in accordance with a seventh preferred embodiment of the invention comprises a parallelepiped casing 72 including a receptacle 721 opened to a front end, a projection 73 formed on a rear end, and a covering member 71 formed on a top surface; an elastic pull cord L having one end fastened in the projection 73; and a protrusion S secured to the other end of the pull cord L. A tray 74 includes a raised edge 741. In a first position, the protrusion S is attached to the projection 73. In a second position, the protrusion S is spaced from the projection 73 by pulling the pull cord L a distance.

A rectangular card K' is configured to receive in a concave portion of the tray 74. Further, the tray 74 is configured to receive in the card holder 7 for storage by inserting into the receptacle 721.

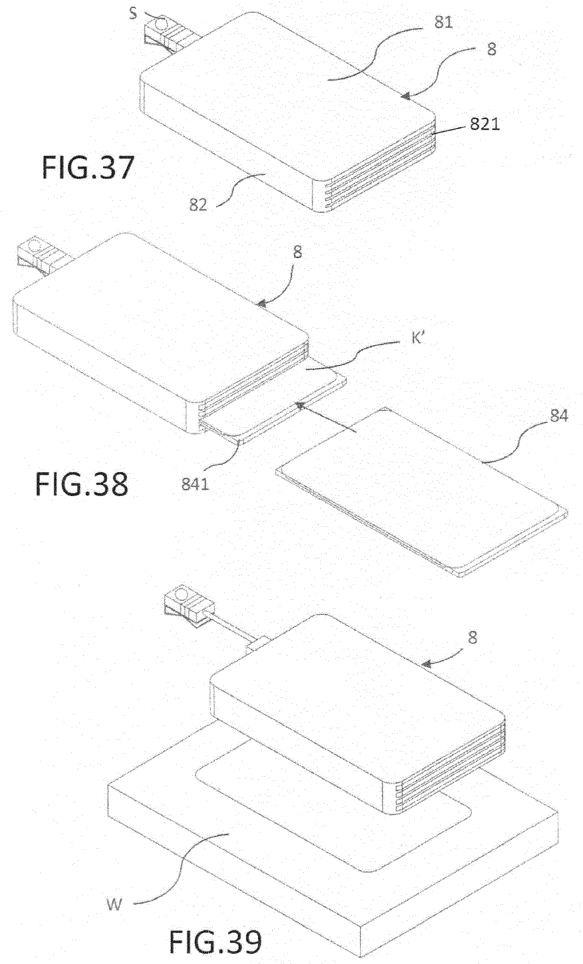

Referring to FIGS. 37 to 39, a card holder 8 in accordance with an eighth preferred embodiment of the invention comprises a parallelepiped casing 82 including a plurality of receptacles 821 opened to a front end, a projection 83 formed on a rear end, and a covering member 81 formed on a top surface; an elastic pull cord L having one end fastened in the projection 83; and a protrusion S secured to the other end of the pull cord L. A rectangular tray 84 includes a raised edge 841. In a first position, the protrusion S is attached to the projection 83. In a second position, the protrusion S is spaced from the projection 83 by pulling the pull cord L a distance.

A rectangular card K' is configured to receive in a concave portion of the tray 84. Further, the tray 84 is configured to receive in the card holder 8 by inserting into one of the receptacles 821. Furthermore, the card holder 8 can be placed on a data reading device W so that the data reading device W can read data from the card K' in the receptacle 821 of the card holder 8.

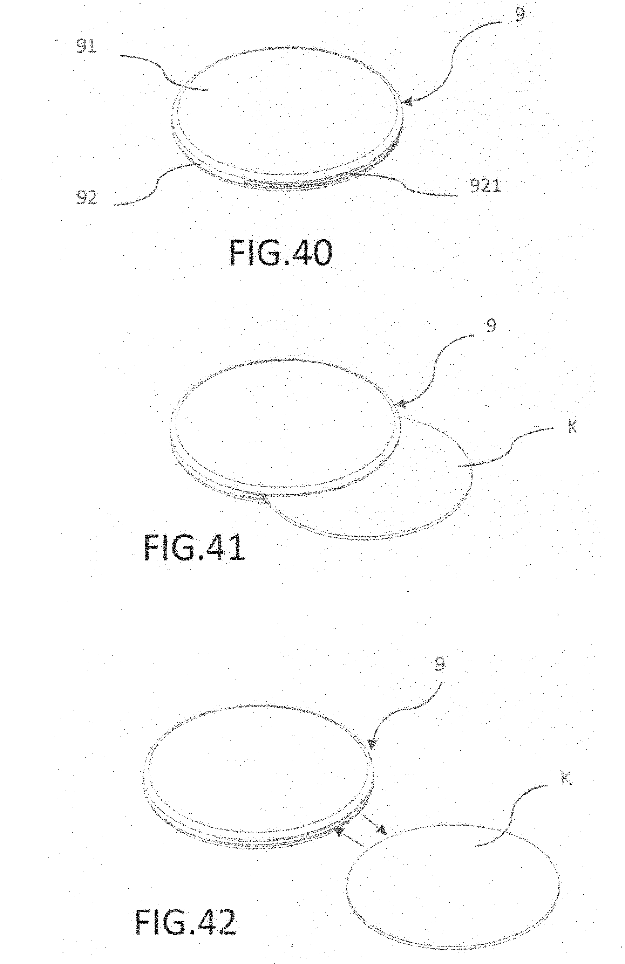

Referring to FIGS. 40 to 42, a card holder 9 in accordance with a ninth preferred embodiment of the invention comprises a coin shaped casing 92 including a receptacle 921 opened to an edge, and a covering member 91 formed on a top surface. A disc shaped card K is configured to receive in the card holder 9 for storage by inserting into the receptacle 921.

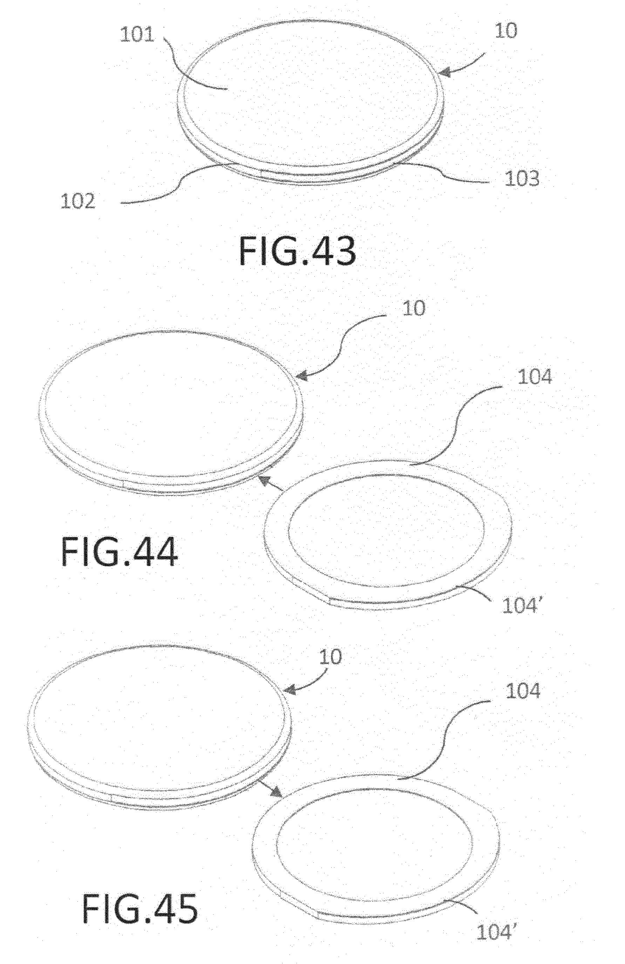

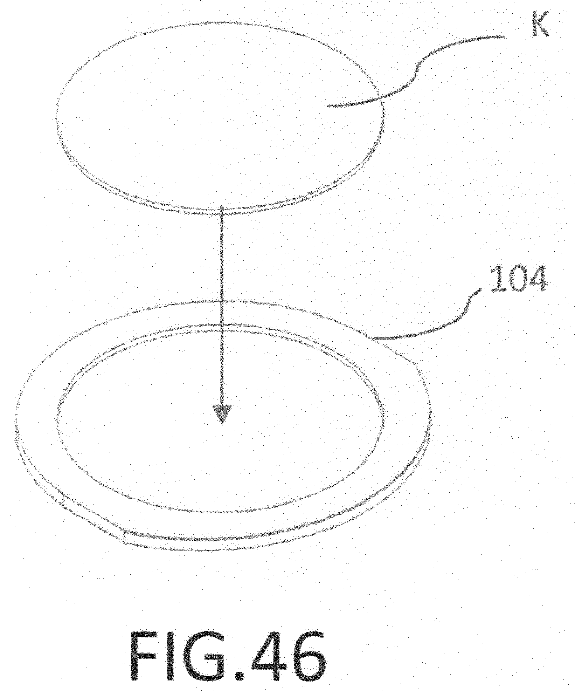

Referring to FIGS. 43 to 46, a card holder 10 in accordance with a tenth preferred embodiment of the invention comprises a coin shaped casing 102 including a receptacle 103 opened to an edge, and a covering member 101 formed on a top surface. A disc shaped tray 104 includes a raised edge 104'. A disc shaped card K is configured to position on a concave portion of the tray 104. The tray 104 is configured to receive in the card holder 10 for storage by inserting into the receptacle 103.

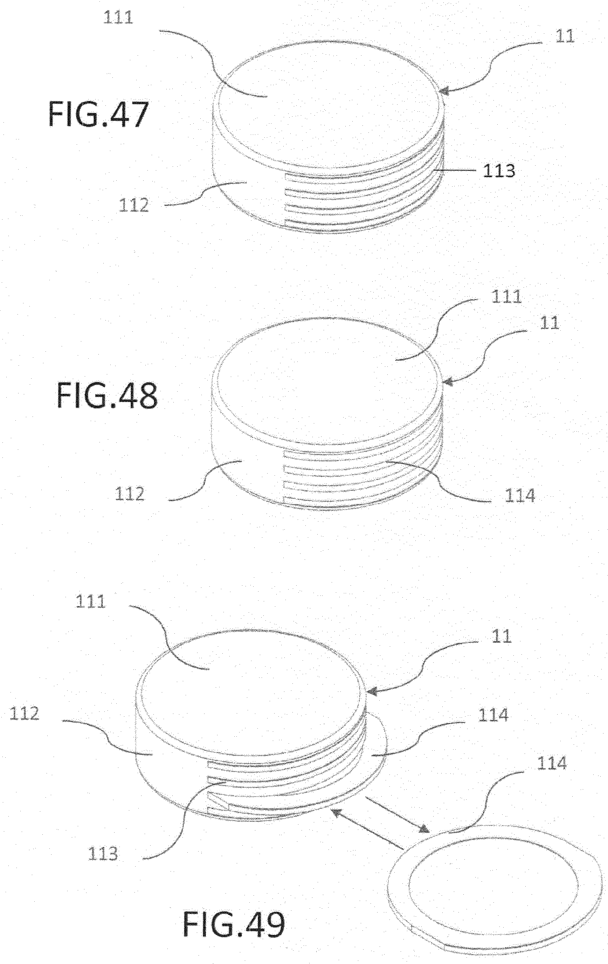

Referring to FIGS. 47 to 49, a card holder 11 in accordance with an eleventh preferred embodiment of the invention comprises a cylindrical casing 112 including a plurality of receptacles 113 opened to an outer surface, and a covering member 111 formed on a top surface. A disc shaped tray 114 is configured to receive in the card holder 11 for storage by inserting into one of the receptacles 113.

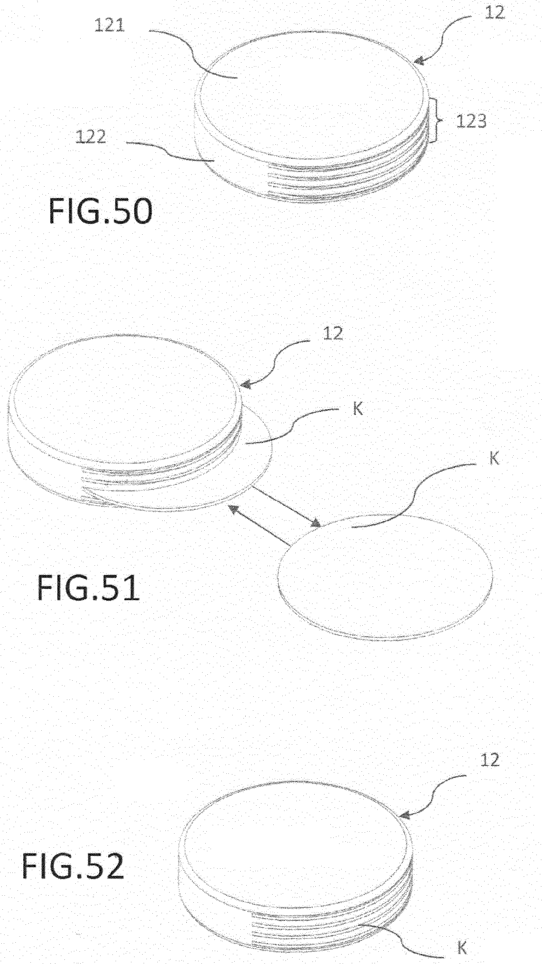

Referring to FIGS. 50 to 52, a card holder 11 in accordance with a twelfth preferred embodiment of the invention comprises a cylindrical casing 122 including a plurality of receptacles 123 opened to an outer surface, and a covering member 121 formed on a top surface. A disc shaped card K is configured to receive in the card holder 12 for storage by inserting into one of the receptacles 123.

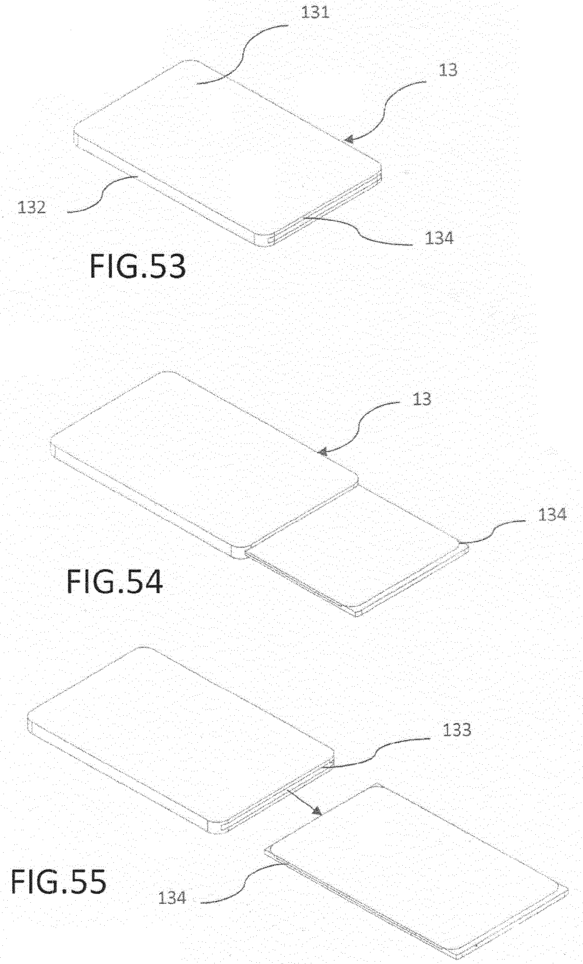

Referring to FIGS. 53 to 56, a card holder 13 in accordance with a thirteenth preferred embodiment of the invention comprises a parallelepiped casing 132 including a receptacle 133 opened to a front end, and a covering member 131 formed on a top surface. A rectangular card K' is configured to position in a concave portion of the tray 134. Further, the tray 134 is configured to receive in the card holder 13 for storage by inserting into the receptacle 133.

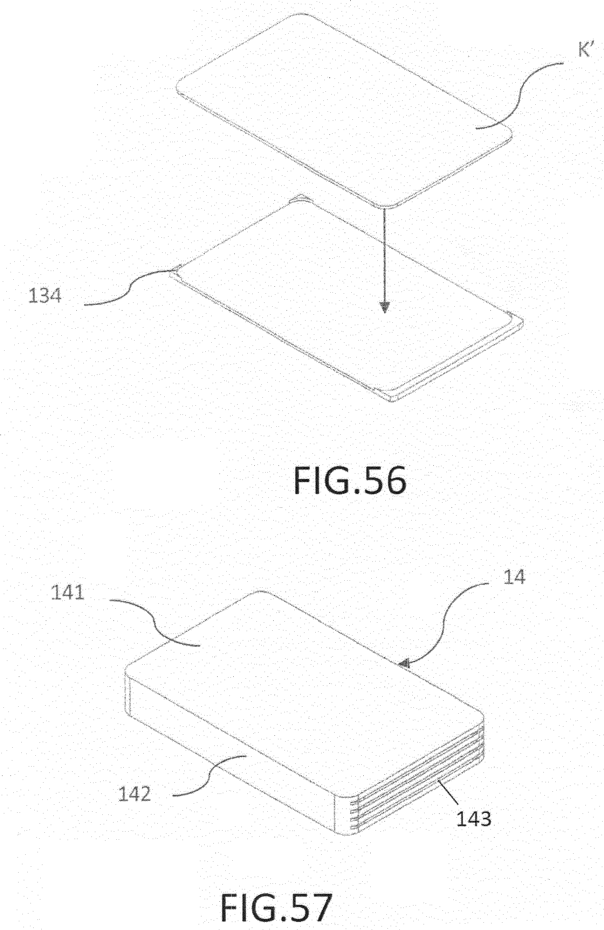

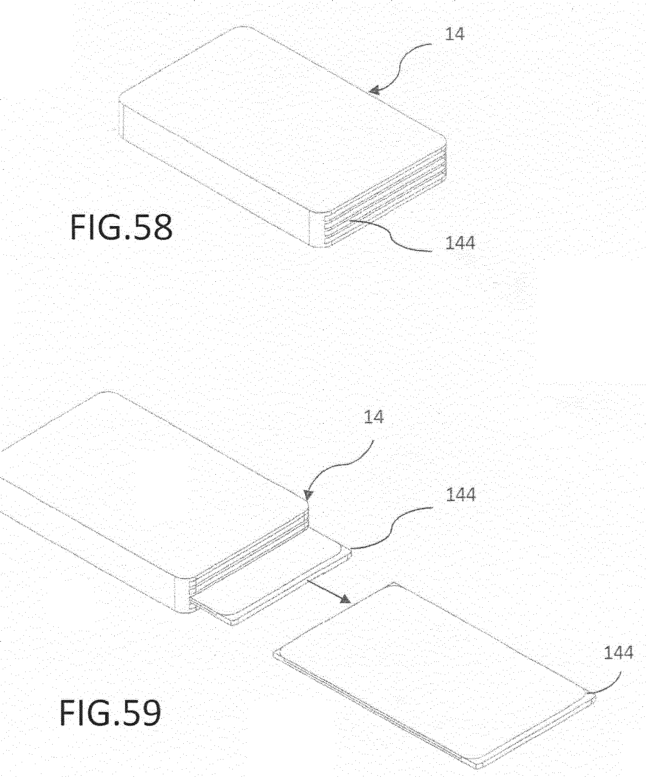

Referring to FIGS. 57 to 59, a card holder 14 in accordance with a fourteenth preferred embodiment of the invention comprises a parallelepiped casing 142 including a plurality of receptacles 143 opened to a front end, and a covering member 141 formed on a top surface. A rectangular tray 144 is configured to receive in the card holder 14 for storage by inserting into one of the receptacles 143.

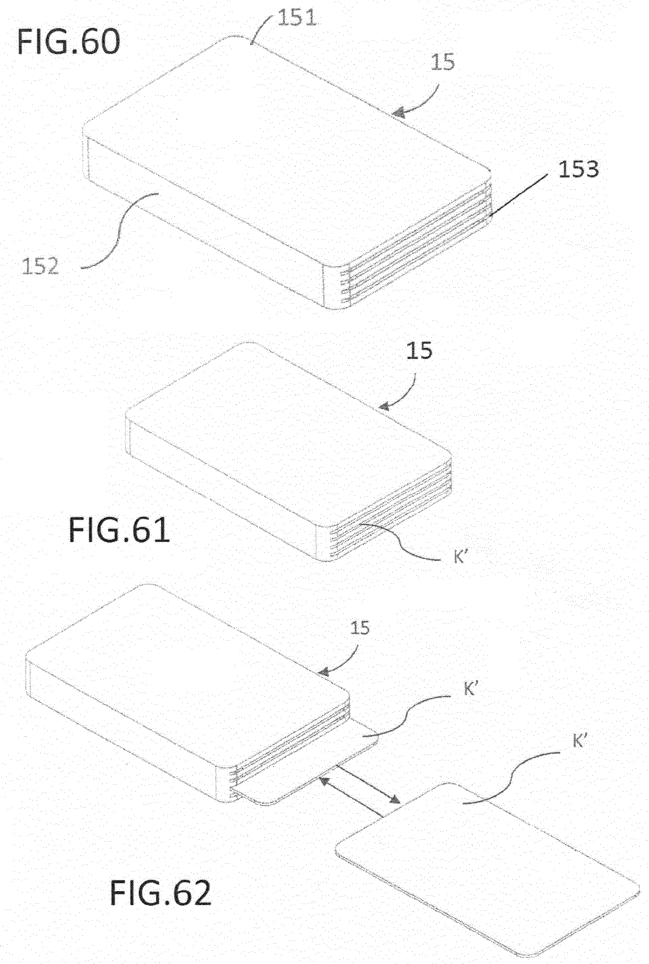

Referring to FIGS. 60 to 62, a card holder 15 in accordance with a fifteenth preferred embodiment of the invention comprises a parallelepiped casing 152 including a plurality of receptacles 153 opened to a front end, and a covering member 151 formed on a top surface. A rectangular card K' is configured to receive in the card holder 15 for storage by inserting into one of the receptacles 153.

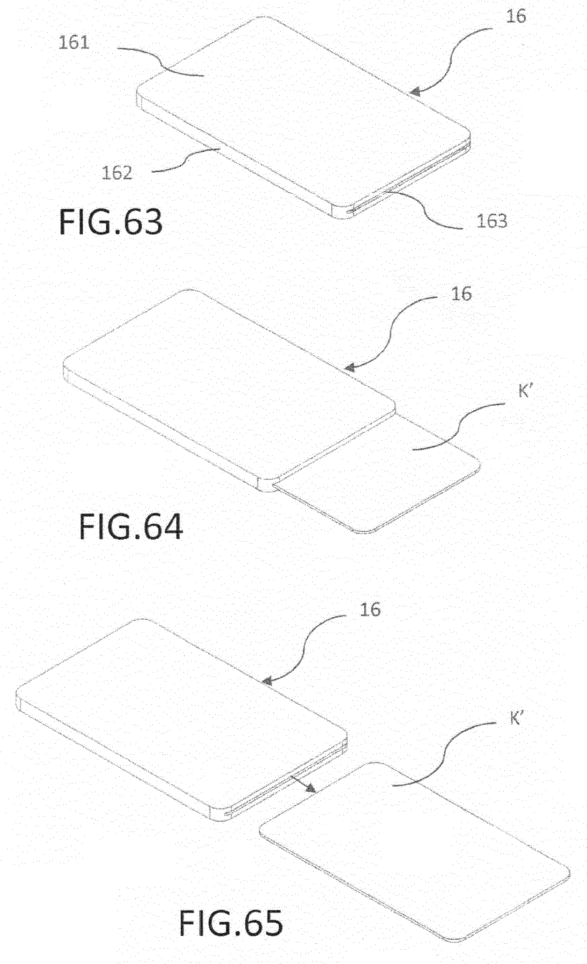

Referring to FIGS. 63 to 65, a card holder 16 in accordance with a sixteenth preferred embodiment of the invention comprises a rectangular casing 162 including a receptacle 163 opened to a front end, and a covering member 161 formed on a top surface. A rectangular card K' is configured to receive in the card holder 16 for storage by inserting into the receptacle 163.

While the invention has been described in terms of preferred embodiments, those skilled in the art will recognize that the invention can be practiced with modifications within the spirit and scope of the appended claims.

## Claims

1. A card holder comprising:
a projection formed on an outer surface;
an elastic pull cord having a first end fastened in the projection;
a protrusion secured to a second end of the pull cord; and
at least one receptacle each configured to receive a card;
wherein in a first position, the protrusion is attached to the projection; and
wherein in a second position, the protrusion is spaced from the projection.

2. The card holder of claim 1, wherein the number of the at least one receptacle is at least two.

3. The card holder of claim 1, wherein each of the at least one receptacle is shaped as a disc.

4. The card holder of claim 1, wherein each of the at least one receptacle is shaped as a square.

5. The card holder of claim 1, wherein each of the at least one receptacle is shaped as a rectangle.

6. A card holder comprising:
a projection formed on an outer surface;
an elastic pull cord having a first end fastened in the projection;
a protrusion secured to a second end of the pull cord;
at least one receptacle; and
at least one tray each configured to position a card thereon and receive in one of the at least one receptacle;
wherein in a first position, the protrusion is attached to the projection; and
wherein in a second position, the protrusion is spaced from the projection.

7. The card holder of claim 6, wherein the number of the at least one receptacle is at least two.

8. The card holder of claim 6, wherein each of the at least one receptacle is shaped as a disc.

9. The card holder of claim 6, wherein each of the at least one receptacle is shaped as a square.

10. The card holder of claim 6, wherein each of the at least one receptacle is shaped as a rectangle.

11. The card holder of claim 1 or 6, wherein the protrusion is configured to attach to a mobile phone, a wrist watch, a necklace, a key ring, or a Universal Serial Bus (USB) flash drive.
